# EUROPEAN PATENT SPECIFICATION

(11) **EP 1 630 414 B1**
(45) Date of publication and mention of the grant of the patent: **20.10.2010**
(21) Application number: 04702799.0
(22) Date of filing: 16.01.2004
(51) Int. Cl.: F03B 9/00, F03B 1/02

(54) **POWER GENERATION DEVICE UTILIZING FALLING WATER FLOW**
FALLWASSERSTRÖMUNG VERWENDENDE ENERGIEERZEUGUNGSVORRICHTUNG
DISPOSITIF DE PRODUCTION D'ENERGIE UTILISANT UN ECOULEMENT D'EAU DESCENDANT

(43) Date of publication of application: 01.03.2006
(73) Proprietor: Takeuchi MFG.Co.,Ltd., Hanishina-gun, Nagano 389-0601 (JP)
(72) Inventor: TAKEUCHI, Akio, 9637, Oaza-Sakaki, Nagano 389-0601 (JP)
(74) Representative: Fritsche, Rainer
(86) International application number: PCT/JP2004/000281
(87) International publication number: WO 2005/068831

(56) References cited:
- EP-A- 1 130 255
- DE-U1- 20 012 759
- DE-U1- 29 801 505
- GB-A- 2 350 159
- JP-A- 1 280 683
- JP-A- 1 280 683
- JP-U- 62 108 572
- US-A- 1 483 505
- US-A- 1 483 505

## Description

### Technical Field:

The present invention relates to a generating set utilizing falling water flow, adapted to rotate a generator by effectively utilizing the energy of falling water flow in a waterfall, a dam in a river, and the like.

### Background Art:

As one of the methods of obtaining electric power from an energy source which is clean and harmless to the earth environment, there is a generating set adapted to rotate a generator by rotating a water wheel by utilizing falling water flow obtained in the natural world.

JP 01 280 683 A, which is considered as the closest prior art to the subject-matter of claim 1, describes a hydraulic power generating equipment to generate a generating output. Such generating equipment already has a conveying unit with a bucket to transport water in a vertical direction. The bucket and the respective conveyor are connected to a generator to generate generating output.

US 1,483,505 describes a water power device which has buckets, being filled with water and being rotated to generate an energy output. The water is filled in the bucket via a tube.

EP 1 130 255 A1 describes an apparatus to generate energy with water and wind buckets both running on separate conveyors. The conveyers are connected to each other to assist the respective other conveyor.

In the German Utility Model DE 200 12 759 U1, a generating set is described with a bucket to be filled with water and to move with a conveyor to which they are attached to. The energy of the water is transferred to a generator.

GB 2 350 159 A discloses a torque generator. Such torque generator has a functionality to be rotated by gas bubbles, which have an ascending force within a water filled system.

German Utility Model DE 298 01 505 U1 describes a generating set with buckets being fixed to a conveyor. The buckets are filled with water and thus start to rotate the conveyor.

However, none of the related art generating sets utilizing a water wheel which is adapted to rotate a generator by utilizing falling water flow has a structure capable of effectively extracting the energy of the falling water flow. These generating sets have not yet reached a level at which a demand for the electric power in the modern society, in which the electric power is consumed in large quantities, is met satisfactorily.

The present invention has been made in view of such problems, and provides a generating set utilizing falling water flow, capable of efficiently extracting the energy of falling water flow obtained from a waterfall, a dam across a river and the like, i.e., from the natural world. An object of the present invention is to provide a generating set utilizing falling water flow, capable as compared with a related art generating set utilizing a waterwheel of greatly improving the quantity of the electric energy generated by the generator adapted to be rotated by utilizing falling water flow.

### Disclosure of the Invention:

To achieve such an object, the generating set utilizing falling water flow according to the present invention is provided with a substantially vertically standing cylindrical frame having a falling water flow introduction port at a top end thereof and a falling water flow discharge port at a lower end thereof, and adapted to pass the falling water flow therethrough. On the inner side of the cylindrical frame in the vertical direction, a conveyor is provided circulatably via rotary shafts in a loop-like tensed state. In the longitudinal direction and along an outer surface of a circulating portion of the conveyor, a plurality of buckets into which the falling water flow is introduced are fixed thereto at regular intervals so that openings of the buckets face in the direction opposite to the direction in which the conveyor is circulated. The buckets, the openings of which face in the upward direction, lined up on the outer surface of one side of the circulating portion of the conveyor are arranged along a passage through which falling water flow moves from the introduction port at the upper end of the cylindrical frame into the inner side of the cylindrical frame. A generator is connected to one of rotary shafts adapted to support the conveyor circulatably and rotate in accordance with the circulation of this conveyor.

In the generating set utilizing falling water flow, having such a structure as is described above, falling water flow entering the introduction port at the upper end of the cylindrical frame and flowing into the inner side of the cylindrical frame further flows into each of the buckets, the openings of which face in the upward direction, lined up on the outer surface of one side of the circulating portion of the conveyor disposed inside the cylindrical frame. The one side of the circulating portion of the conveyor on which the buckets are provided receives the potential energy and kinetic energy (impact force) of the falling water flow which has flowed into the buckets, and is circulated downward with these buckets. As a result, the rotary shaft for circulatably supporting the conveyer rotates with the rotation of the circulating portion of the conveyer. The generator connected to one of the rotary shaft is then rotated, thereby generating electric power.

The buckets which are lined up on the outer surface of the one side of the circulating portion of the conveyor and store the falling water flow having entered therein are moved down with the circulating portion of the conveyor along the outer surface of the one side of the circulating portion. When the openings of the buckets face in the downward direction on the outer surface of the circulating portion at the lower end of the conveyor, the water in the buckets is discharged to the outside thereof. The falling water flow is then discharged to the outside of the cylindrical frame through the discharge port at the lower end of the cylindrical frame. On the other hand, the falling water flow, which enters the introduction port at the upper end of the cylindrical frame and passes through a space in the inner portion of the cylindrical frame without flowing into the buckets, is discharged as it is to the outside of the cylindrical frame through the discharge port at the lower end of the cylindrical frame.

The buckets from which the stored falling water flow has been discharged to become empty are circulated with the circulating portion of the conveyer in the upward direction along the other side of the circulating portion of the conveyor. The buckets are thereby moved and returned to the outer surface of the one side of the circulating portion of the conveyor.

The same operations are carried out repeatedly.

In such a case, a plurality of buckets, the upwardly directed openings of which are lined up at regular intervals along a passage through which the falling water flow entering the introduction port at the upper end of the cylindrical frame and flowing into the inner side thereof passes, continue to descend with the circulating portion of the conveyor over a long distance along the one side of the circulating portion of the vertically long conveyor, keeping the water in the buckets without leakage. Most of the potential energy of the falling water flow run into the interior of the buckets continues to be transmitted via the buckets into which the falling water flow runs for a long period of time to the circulating portion of the conveyor to which the buckets are fixed. At the same time, most of the kinetic energy (impact force) of the falling water flow which has entered the interior of the buckets also continues to be transmitted via the buckets for a long period of time to the circulating portion of the conveyor to which the buckets are fixed. Most of the potential energy and kinetic energy of the falling water flow run into the interior of the buckets is converted effectively into the conveyor circulating energy. As a result, most of the potential energy and kinetic energy of the falling water flow which have entered the interior of the buckets can be utilized effectively without loss as the energy for rotating the generator connected to one of the rotary shafts of the conveyor.

On the other hand, in a generating set utilizing waterwheels, falling water flow enters openings of a plurality of buckets lined up circularly around waterwheels passing successively in a passage for the falling water flow, and the water is put in a temporarily bucket-stored state. The waterwheels receive the potential energy and kinetic energy (impact force) of the falling water flow which has run into the buckets, and thereby rotate. A generator connected to rotary shafts of the waterwheels is rotated to generate the electric power. However, the buckets lined up circularly around the waterwheels passing successively in the passage of the falling water flow changes the state of their openings in a short period of time from an upwardly directed state to a downwardly directed state in accordance with the rotation of the waterwheels. The falling water flow which has run into the interior of the buckets is merely stored therein temporarily in a short period of time, and the water soon flows out from the downwardly directed openings to the outside of the buckets. The water disappears from the interior of the buckets in a short period of time. As a result, in the generating set utilizing waterwheels, only a small part of the potential energy and kinetic energy (impact force) of the falling water flow running into the buckets lined up circularly around the waterwheels passing successively in the passage for the falling water flow can be effectively utilized as the energy for rotating the waterwheels.

For these reasons, in the generating set utilizing falling water flow according to the present invention, the greater part of the potential energy and kinetic energy of the falling water flow can be utilized effectively without loss as the energy for rotating the generator and thereby obtaining electric power as compared with the related art generating set adapted to rotate a generator by utilizing waterwheels.

In the generating set utilizing falling water flow according to the present invention, a funnel for having the falling water flow introduced into the inner side of the cylindrical frame through the introduction port at the upper end of the cylindrical frame may be additionally provided on the same introduction port.

In this case, the falling water flow can be introduced into the cylindrical frame smoothly with no loss without leaking the water to the outside of the introduction port, through the introduction port via the interior of the funnel additionally provided on the introduction port.

In the generating set utilizing falling water flow according to the present invention, a storage tank for temporarily storing the falling water flow introduced into the inner side of the cylindrical frame through the introduction port may be provided.

In this case, falling water flow obtained from a waterfall, a dam in a river, etc. in the natural world can be stored temporarily in the storage tank, and the water temporarily stored in the storage tank can be made to flow into the inner side of the cylindrical frame via the introduction port. Therefore, even when the quantity of the falling water flow obtained from the natural world is unstable and varies to high and low levels, the falling water flow can be continuously flown via the storage tank into the interior of the cylindrical frame in a stable manner by a predetermined quantity at a time. The generator can be rotated stably at a substantially constant speed by utilizing the potential energy and kinetic energy of the falling water flow continuing to run into the cylindrical frame stably by a predetermined quantity at a time. This allows a predetermined quantity of electric power to be obtained from the generator.

In the generating set utilizing falling water flow according to the present invention, guide plates for making the falling water flow run into the interior of the buckets may be provided on outer edges of the openings of the buckets lined up on the outer surface of the circulating portion of the conveyor in the longitudinal direction so that the guide plates stand up diagonally outward opposite to the side of trunk portions of the buckets.

In such a case, most of the falling water flow entering the introduction port and run into the inner side of the cylindrical frame can be introduced by utilizing the guide plates, which are provided on the outer edges of the openings of the buckets, from the upwardly directed openings of the respective buckets lined up on the outer surface of the one side of the circulating portion of the conveyor provided in the passage in which the falling water flow passes, into the buckets smoothly without spilling the water therefrom to the outside of the buckets. The guide plates can prevent most the falling water flow from passing through the inner side of the cylindrical frame without running into the respective buckets lined up on the outer surface of the one side of the circulating portion of the conveyor. The guide plates can also prevent the potential energy and kinetic energy of the falling water flow from not being utilized effectively as the conveying circulating energy.

In the generating set according to the present invention, the conveyor may be made of a combination of a chain and sprockets.

In such a case, the conveyor made of a combination of a chain and sprockets can be circulated reliably in the vertical direction without slippage owing to the falling water flow working as a lubricant passing in the inner side of the cylindrical frame. This allows the generator connected to one of the rotary shafts of the chain supporting sprockets to be rotated reliably in the chain circulating direction in accordance with the circulation of the chain. In this case, the chain can be circulated around the sprockets smoothly with a low meshing resistance by using the falling water flow working as a lubricant passing in the inner side of the cylindrical frame.

### Brief Description of the Drawings:

Fig. 1 is a front view in section showing a rough construction of a generating set utilizing falling water flow according to the present invention;
Fig. 2 is a side view of the generating set utilizing falling water flow according to the present invention;
Fig. 3 is a front view in section showing a rough construction of another mode of generating set according to the present invention.

### Best Mode for Carrying Out the Invention:

The best mode for carrying out the invention will now be described in accordance with the drawings.

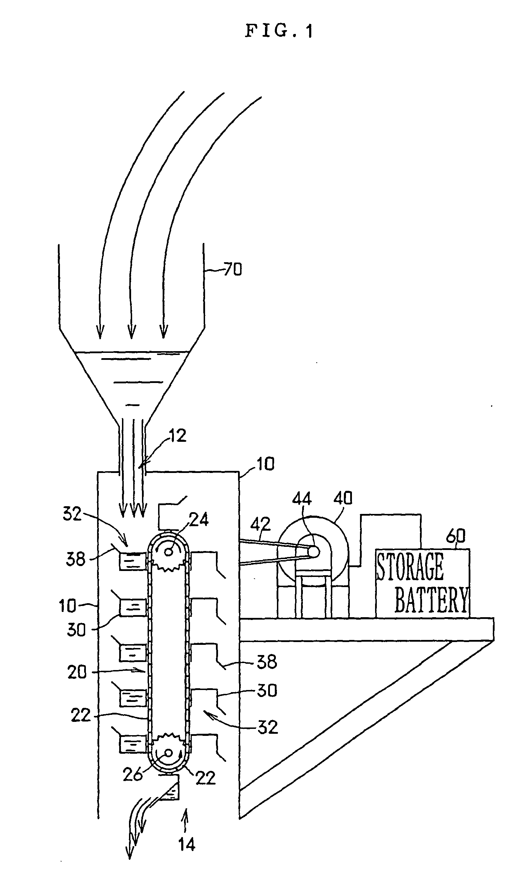

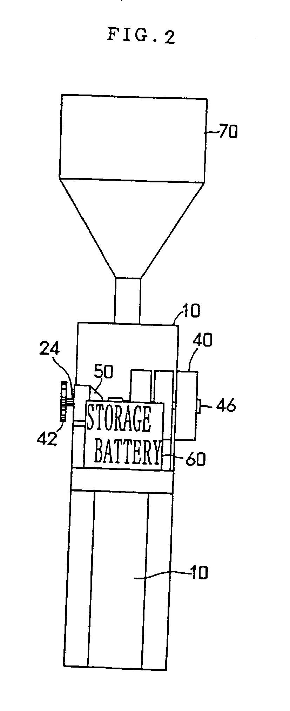

Fig. 1 and Fig. 2 show a preferred mode of embodiment of the generating set utilizing falling water flow according to the present invention.

This generating set is provided with a substantially vertically standing cylindrical frame 10 having at a left side of an upper end thereof an introduction port 12 for introducing falling water flow, and at a lower end thereof a discharge port 14 opened widely for discharging the falling water flow therefrom. In the vertical direction in an inner side of the cylindrical frame 10, a longitudinally elongated conveyor 20 is provided circulatably in the shape of a loop and in a tensed state. A circulating portion 22 of the conveyor 20 is supported circulatably around a pair of upper and lower rotary shafts 24, 26 provided laterally through an inner space in the cylindrical frame 10. A plurality of buckets 30 into which the falling water flow is introduced are fixed in a longitudinally lined up state at predetermined intervals to an outer surface of the circulating portion 22 of the conveyor with openings 32 of the buckets facing in the direction opposite to the direction in which the conveyor 20 is circulated. The buckets 30 lined up on the outer surface of one side of the circulating portion 22 and having upwardly directed openings 32 are arranged along a passage through which the falling water flow which has run into the inner side of the cylindrical frame 10 from the introduction port 12 at the upper end of the cylindrical frame into the interior of the cylindrical frame 10 is passed. A generator 40 is connected to the rotary shaft 24 rotating in accordance with the circulation of the conveyor 20 and supporting the upper end of the circulating portion 22 of the conveyor. The generator 40 and rotary shaft 24 are connected to a driving shaft 46 of the generator via a chain 42, sprocket 44 and a speed increaser 50. The generator 40 receives a rotational force of the rotary shaft 24 which rotates in accordance with the circulation of the circulating portion 22 of the conveyor, to be rotated at a high speed via the speed increaser 50 and the like. The generator 40 is provided with a capacitor 60 by the side thereof, and formed so that the electric power generated thereby can be stored temporarily in the capacitor 60.

The generating set utilizing falling water flow shown in Fig. 1 and Fig. 2 is formed as described above. In this generating set, the falling water flow introduced from the introduction port 12 at a left side of the upper end of the cylindrical frame into the same cylindrical frame 10 can be made to run into each of the buckets 30 which are lined up on the outer surface of the one side of the circulating portion 22 of the conveyor arranged along the passage for the falling water flow and the openings 32 of which face the upward direction. The one side of the circulating portion 22 of the conveyor to which the buckets 30 are fixed can be circulated downward by utilizing the kinetic energy and potential energy of the falling water flow which has been made to flow into the buckets 30. The circulating portion 22 of the conveyor can be circulated vertically around the pair of upper and lower rotary shafts 24, 26. In accordance with the circulation of the circulating portion 22 of the conveyor, the upper rotary shaft 24 supporting the conveyor circulatably can be rotated. The generator 40 connected to the upper rotary shaft 24 via the speed increaser 50 and the like is rotated at a high speed to generate electric power. The electric power generated by the generator 40 can be stored temporarily in the capacitor 60.

The falling water flow which has entered the introduction port 12 at the left side of the upper end of the cylindrical frame and run into the buckets 30 lined up on the outer surface of the one side of the circulating portion 22 of the conveyor is stored in the same buckets 30. These buckets 30 descend along the outer surface of the one side of the circulating portion 22 of the conveyer with the circulating portion 22 of the conveyer. When the openings 32 of the buckets are put in a downwardly directed state on the outer surface of the circulating portion 22 at the lower end of the conveyor, the water can be discharged from the openings 32 to the outside of the buckets 30. The falling water flow discharged to the outside of the buckets 30 can be discharged to the outside of the cylindrical frame 10 through the discharge port 14 at the lower end of the cylindrical frame. On the other hand, the falling water flow entering the introduction port 12 at the left side of the upper end of the cylindrical frame, flowing into the inner side thereof and not running into the buckets 30 but passing through an inner space of the cylindrical frame 10 can be discharged as it is to the outside thereof through the discharge port 14 at the lower end of the cylindrical frame.

The buckets 30, from which the falling water flow has just been discharged, become empty and are circulated upward with the other side of the circulating portion 22 along the outer surface thereof, and thereby moved and returned to the outer surface of the one side of the circulating portion 22 of the conveyor.

The same operations can thereafter be carried out repeatedly.

In these operations, the falling water fall which has run into each of the buckets 30, the openings 32 of which are directed upward, lined up at predetermined intervals on the outer surface of the one side of the circulating portion 22 of the conveyor provided along the passage through which the falling water flow entering the introduction port 12 at the left side of the upper end of the cylindrical frame 10 and running into the inner side of the cylindrical frame passes can be continued to descend over a long distance with the circulating portion 22 of the vertically elongated conveyor along the outer surface of the one side of the circulating portion 22 of the conveyor while the falling water flow run into the buckets 30 being kept as it is without spills. Most of the potential energy of the falling water flow running into the buckets 30 can be continued to be transmitted for a long period of time to the circulating portion 22 of the conveyer to which the buckets 30 are fixed, via the buckets 30 into which the falling water flow has run. At the same time, most of the kinetic energy (impact force) of the falling water flow which has entered the buckets 30 be can continued to be transmitted for a long period of time to the circulating portion 22 of the conveyer to which the buckets 30 are fixed, via the buckets 30 which the falling water flow has run into. Most of the potential energy and kinetic energy of the falling water flow, which has run into the buckets 30, can be effectively converted into the energy for circulating the conveyor 20. As a result, most of the potential energy and kinetic energy of the falling water flow, which has run into the buckets 30, can be utilized effectively without loss as the energy for rotating the generator 40 connected to the rotary shaft 24 of the conveyor, i.e. the electric energy.

In this generating set utilizing falling water flow, a funnel 70 may be additionally provided on the introduction port 12 at the upper end of the cylindrical frame as shown in Fig. 1. The falling water flow obtained from the natural world may be thus rendered to flow into the inner side of the cylindrical frame 10 smoothly without loss through the introduction port 12 without causing the water to leak out to the exterior of the introduction port 12.

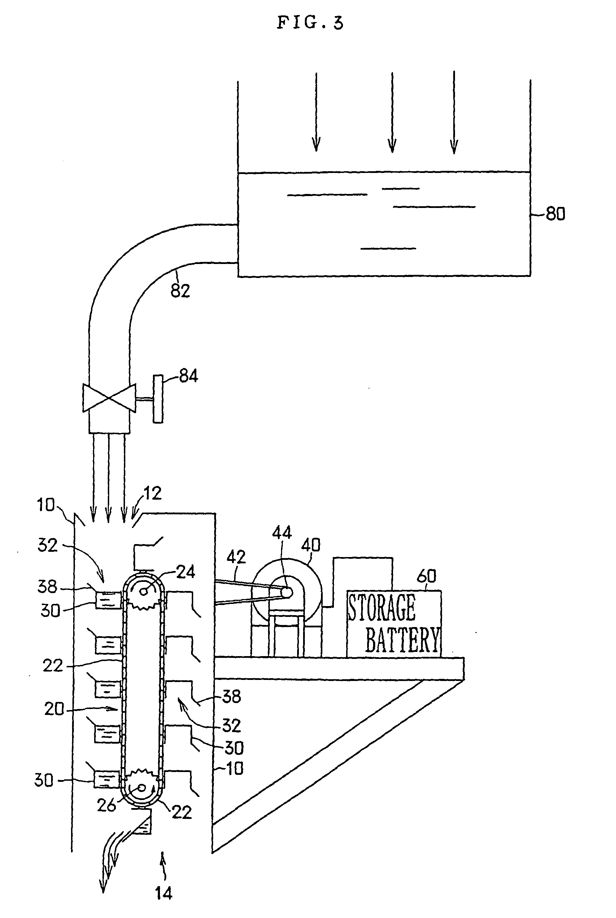

In this generating set utilizing a falling water flow, a large-sized storage tank 80 for temporarily storing the falling water flow which is to be run into the inner side of the cylindrical frame through the introduction port 12 may be provided as shown in Fig. 3. Therefore, the falling water flow obtained from a waterfall, a dam in a river, etc. in the natural world may stored temporarily in the storage tank 80, and then made to flow into the inner side of the cylindrical frame 10 through the introduction port 12. The generating set is preferably formed so that, even when a rate of the falling water flow obtained from a waterfall, a dam in a river, etc. in the natural world is not stabilized but varied to high and low levels, the falling water flow obtained from the natural world can be made to flow continuously into the inner side of the cylindrical frame at a predetermined rate at a time via the interior of the storage tank 80. The generator 40 may be rotated at a substantially constant speed by utilizing the potential energy and kinetic energy of the falling water flow, which continues to be introduced into the inner side of the cylindrical frame 10 stably at a predetermined rate at a time, to allow a predetermined quantity of electric power to be obtained stably from the generator 40. In such a case, a valve 84 may be provided in a discharge passage 82 for the falling water flow from the storage tank as shown in Fig. 3. The generating set may be formed so that the quantity of the falling water flow running from the storage tank 80 into the inner side of the cylindrical frame 19 can be regulated accurately so as to prevent the quantity of the water flow from becoming excessively large or excessively small by regulating the degree of opening and closing of the valve 84 to high and low levels.

This generating set utilizing falling water flow can also be adapted to have both the funnel 70 and storage tank 80. In this case, a generating set utilizing falling water flow, having the effects of both the funnel 70 and storage tank 80 can be provided.

In the generating set utilizing falling water flow as illustrated in Figs. 1 and 3, the outer edges of the openings 32 of the respective buckets lined up in the longitudinal direction on the outer surface of the circulating portion 22 of the conveyor and fixed thereto may be provided with guide plates 38 for making the falling water flow run into the inside of the bucket 30 smoothly, in such a manner that the guide plates stand up diagonally outward from the portions of the buckets which are on the opposite side of trunk portions thereof. By utilizing the guide plates 38, most of the falling water flow running from the introduction port 12 into the inner side of the cylindrical frame may be introduced into each of the buckets 30 lined up on the outer surface of the one side of the circulating portion 22 of the conveyor provided along the passage through which the falling water flow passes, in such a manner that the water can enter the buckets 30 smoothly without leaking the water from the upwardly directed openings 32 to the outside of the buckets 30. It may thus be prevented that the greater part of the falling water flow passes through the inside of the cylindrical frame 10 in vain without running into each of the buckets 30 lined up on the outer surface of the one side of the circulating portion 22 of the conveyor. Accordingly, most of the potential energy and kinetic energy of the falling water are preferably rendered to be effectively utilized for the circulation of the circulating portion 22 of the conveyor.

In the generating set utilizing falling water flow as illustrated in Figs. 1 and 3, the conveyer 20 may be formed by a combination of a chain and sprockets, thereby securely circulating the conveyer 20 in the vertical direction without slippage while making use of the falling water flow which passes through the inside of the cylindrical frame 10 as a lubricant. The generator 40 connected to the rotary shaft 24 of the sprocket for supporting the chain may be thus securely rotated in the circulating direction of the chain in accordance with the circulation of the chain of the conveyer 20. In this case, it is preferable to smoothly circulate the chain around the sprockets with reduced engagement resistance by making use of the falling water flow which passes through the inside of the cylindrical frame 10 as a lubricant.

Furthermore, in the generating set utilizing falling water flow as illustrated in Figs. 1 and 3, the generator 40, the speed increaser 50, the capacitor 60 and other components may be disposed in the outside upper region of the cylindrical frame 10. In this case, the generator 40, the speed increaser 50, the capacitor 60 and other components may be protected by the peripheral wall of the cylindrical frame 10 or the like so that these devices are prevented from splashes of part of the falling water flow and from break down due to the splash of the falling water flow.

### Industrial Applicability:

The generating set utilizing falling water flow according to the present invention has a wide range of effective applicability as a source of electricity for the purpose of energy saving, the source being capable of generating electricity by utilizing energy obtained from the nature and thus being friendly to the global environment.

## Claims

1. A generating set utilizing falling water flow, comprising: a substantially vertically standing cylindrical frame (10) having an introduction port (12) at its top end for introducing falling water flow and a discharge port (14) at its lower end for discharging the falling water flow so as to pass the falling water flow through the cylindrical frame (10); a conveyer (20) circulatably provided inside the cylindrical frame (10) in the vertical direction via a rotary shaft in a loop-like tensed state; a plurality of buckets (30) disposed in the longitudinal direction along an outer surface of a circulating portion of the conveyor and fixed thereto at predetermined intervals, into which the falling water flow is introduced and the openings of which face in the direction opposite to the circulating direction of the conveyor (20); and a generator (40) connected to the rotary shaft which supports the conveyor and rotates with the circulation of the circulating portion of the conveyor (20), the buckets, the openings of which face in the upward direction, lined up on the outer surface of one side of the circulating portion of the conveyor are arranged along a passage through which the falling water flow introduced from the introduction port into the inside of the cylindrical frame (10) passes, **characterized in that** guide plates (38) for introducing the falling water flow into the buckets are provided on outer edges of the openings of the respective buckets (30) lined up on the outer surface of the circulating portion of the conveyor in the longitudinal direction in such a manner that the guide plates (38) stand up diagonally outward opposite to the trunk side of the buckets (30).

2. A generating set as set forth in claim 1, **characterized in that** a funnel (70) for introducing the falling water flow into the inside of the cylindrical frame (10) through the introduction port is provided on the introduction port at the upper end of the cylindrical frame.

3. A generating set as set forth in claim 1 or 2, **characterized in that** a storage tank (80) for temporarily storing the falling water flow to be introduced into the inside of the cylindrical frame through the introduction port is provided.

4. A generating set as set forth in claim 1, 2 or 3, **characterized in that** the conveyer is formed by a combination of a chain and sprockets.

## Patentansprüche

1. Generatorsatz, der eine fallende Wasserströmung nutzt, umfassend:
einen im Wesentlichen vertikal stehenden zylindrischen Rahmen (10), der an seinem oberen Ende eine Zuführungsöffnung (12) zum Zuführen einer fallenden Wasserströmung und an seinem unteren Ende eine Abführungsöffnung (14) zum Abführen der fallenden Wasserströmung aufweist, um somit die fallende Wasserströmung durch den zylindrischen Rahmen (10) zu führen; ein Fördermittel (20), das innerhalb des zylindrischen Rahmens (10) in vertikaler Richtung mittels einer Welle in einem schleifenartig gespannten Zustand umlaufend vorgesehen ist; eine Vielzahl von Bechern (30), die in Längsrichtung längs einer Außenoberfläche eines umlaufenden Teils des Fördermittels angeordnet und in vorgegebenen Intervallen daran befestigt sind, und in welche die fallende Wasserströmung zugeführt wird und deren Öffnungen in die Richtung entgegengesetzt zu der Umlaufrichtung des Fördermittels (20) weisen; und einen Generator (40), der mit der rotierenden Welle verbunden ist, die das Fördermittel unterstützt und mit dem Umlaufen des umlaufenden Teils des Fördermittels (20) rotiert, wobei die Becher, deren Öffnungen in Aufwärtsrichtung weisen und die an der Außenoberfläche einer Seite des umlaufenden Teils des Fördermittels aufgereiht sind, längs eines Durchlasses angeordnet sind, durch den die von der Zuführungsöffnung in das Innere des zylindrischen Rahmens (10) zugeführte fallende Wasserströmung läuft,
**dadurch gekennzeichnet, dass** Führungsplatten (38) zum Zuführen der fallenden Wasserströmung in die Becher an äußeren Rändern der Öffnungen der jeweiligen Becher (30), die an der Außenoberfläche des umlaufenden Teils des Fördermittels aufgereiht sind, in Längsrichtung vorgesehen sind, derart, dass sich die Führungsplatten (38) diagonal nach außen gegenüber der Rumpfseite der Becher (30) erheben.

2. Generatorsatz nach Anspruch 1, **dadurch gekennzeichnet, dass** ein Trichter (70) zum Zuführen der fallenden Wasserströmung in das Innere des zylindrischen Rahmens (10) durch die Zuführungsöffnung an der Zuführungsöffnung am oberen Ende des zylindrischen Rahmens vorgesehen ist.

3. Generatorsatz nach Anspruch 1 oder 2, **dadurch gekennzeichnet, dass** ein Speicherbehälter (80) vorgesehen ist zum vorübergehenden Speichern der fallenden Wasserströmung, die in das Innere des zylindrischen Rahmens durch die Zuführungsöffnung zuzuführen ist.

4. Generatorsatz nach Anspruch 1, 2 oder 3, **dadurch gekennzeichnet, dass** das Fördermittel von einer Kombination aus einer Kette und Kettenrädern gebildet wird.

## Revendications

1. Groupe électrogène utilisant un écoulement d'eau descendant, comprenant : un cadre (10) cylindrique se tenant de manière essentiellement verticale ayant un orifice d'introduction (12) à son extrémité supérieure pour introduire un écoulement d'eau descendant et un orifice de décharge (14) à son extrémité inférieure pour décharger l'écoulement d'eau descendant de sorte à faire passer l'écoulement d'eau descendant à travers le cadre cylindrique (10) ; un convoyeur (20) pourvu de manière circulaire dans le cadre cylindre (10) dans la direction verticale au moyen d'un arbre rotatif à l'état tendu en forme de boucle ; une pluralité d'ailettes (30) disposée dans la direction longitudinale le long d'une surface externe d'une partie circulaire du convoyeur et fixée à celui-ci à des intervalles prédéterminés, où l'écoulement d'eau descendant est introduit et dont les ouvertures font face dans la direction opposée à la direction circulaire du convoyeur (20) ; et un générateur connecté à l'arbre rotatif qui supporte le convoyeur et tourne avec la circulation de la partie circulaire du convoyeur (20), les ailettes, dont les ouvertures se regardent dans la direction ascendante, alignées sur la surface externe d'un côté de la partie circulaire du convoyeur sont agencées le long d'un passage à travers lequel l'écoulement d'eau descendant introduit depuis l'orifice d'introduction à l'intérieur du cadre cylindrique (10) passe,
**caractérisé en ce que** des plaques de guidage (38) pour introduire l'écoulement d'eau descendant dans les ailettes sont pourvues sur les bords externes des ouvertures des ailettes respectives (30) alignées sur la surface externe de la partie circulaire du convoyeur dans la direction longitudinale de sorte que les plaques de guidage (38) se tiennent diagonalement vers l'extérieur de manière opposée au côté de tronc des ailettes (30).

2. Groupe électrogène selon la revendication 1, **caractérisé en ce qu'**un entonnoir (10) pour introduire l'écoulement d'eau descendant à l'intérieur du cadre cylindrique (10) par l'orifice d'introduction est pourvu sur l'orifice d'introduction à l'extrémité supérieure du cadre cylindrique.

3. Groupe électrogène selon la revendication 1 ou 2, **caractérisé en ce qu'**un réservoir de stockage (80) pour stocker temporairement l'écoulement d'eau descendant à introduire à l'intérieur du cadre cylindrique par l'orifice d'introduction est fourni.

4. Groupe électrogène selon les revendications 1, 2, ou 3, **caractérisé en ce que** le convoyeur est formé par une combinaison de chaîne et de roues dentées.
